Europäisches Patentamt

**European Patent Office**

**Office européen des brevets**

(19)

(11) Numéro de publication: **0 075 543**
**A2**

(12) # DEMANDE DE BREVET EUROPEEN

(21) Numéro de dépôt: **82830237.2**

(22) Date de dépôt: **20.09.82**

(51) Int. Cl.³: **A 61 C 13/14**, C 08 F 2/00

(30) Priorité: **21.09.81 IT 952181**

(43) Date de publication de la demande: **30.03.83**
**Bulletin 83/13**

(84) Etats contractants désignés: **AT BE CH DE FR GB LI LU NL SE**

(71) Demandeur: **Frau, Piero, Via Rovai 1, I-50056 Montelupo F. no (Firenze) (IT)**

(72) Inventeur: **Frau, Piero, Via Rovai 1, I-50056 Montelupo F. no (Firenze) (IT)**

(74) Mandataire: **Martini, Lazzaro, Ufficio Brevetti Ing. Lazzaro Martini Via Brunelleschi, 1, I-50123 Firenze (IT)**

(54) **Procédé et dispositif de polymérisation rapide de prothèses odontologiques en résines acryliques situées dans un moufle.**

(57) Pour obtenir, dans en moufle, la polymérisation rapide de prothèses odontologiques, on chauffe à sec le moufle (50) à plus de 100°C (en général 135°C) puis, on le refroidit à sec et à température ambiante; le chauffage et le refroidissement du moufle sont obtenus par contact et avec la pression appropriée (en général 60+100 kg/cm²), entre les bases (61. 04-63') horizontales du moufle (50) et les mâchoires horizontales (23-27) de deux étaux parallèles, séparés, respectivement chauffés et refroidis; les durées de chauffage et de refroidissement sont égales et brèves (en général 15 minutes). Le plâtre contenu dans le moufle est humide pour favoriser la transmission de la chaleur à la résine qui atteint ainsi, sans vitrification, la température (110+115°C) de polymérisation; l'excédent d'humidité est évacué par les trous vaporisateurs (71) du moufle.

0075543

- 1 -

<u>Procédé et dispositif de polymérisation rapide de prothèses odontologiques en résines acryliques situées dans des moufles.</u>

L'invention concerne un procédé et un dispositif de polymérisation rapide de prothèses odontologiques en résines acryliques, situées dans un moufle.

On sait que les prothèses odontologiques en résines acryliques sont actuellement réalisées sur des empreintes en plâtre, situées dans des moufles métalliques, serrés par des brides et de petits étaux. On sait aussi que la polymérisation de la résine est obtenue par chauffage humide des moufles, c'est-à-dire à bain-marie et donc, à une température ne dépassant pas 100°C.

Par conséquent, le procédé est lent, très souvent incomplet et difficilement réalisable en laboratoire.

La présente invention a pour but de proposer un procédé et un dispositif de polymérisation de prothèses odontologiques en résines acryliques, plus rapide et mieux contrôlée que celle actuellement obtenue.

Nous avons atteint ce résultat en adoptant l'idée de chauffer à sec le moufle, en le serrant pendant quelques minutes avec une pression de 60÷110 kg/cm , entre deux surfaces chauffées à une température supérieure à 100°C (avantageusement à 135°C pendant 15 minutes) puis, de le refroidir à sec en le serrant entre deux surfaces refroidies (avantageusement avec la même pression, à température ambiante et pendant le même temps). Le moufle est muni de bases horizontales avec des chevilles de blocage et de parois latérales perforées pour assurer l'élimination, sous forme de vapeur, de l'excédent d'eau contenue dans les empreintes et dont la température est supérieure à 100°C.

Les avantages obtenus grâce à cette invention consistent essentiellement en ce que la polymérisation de la résine est totale et la résistance de la prothèse maximum; en ce que la durée des opérations est réduite au minimum; en ce que le travail de cuisson est continu; en ce que l'humidité du plâtre contenu dans le moufle permet de réaliser une polymérisation humide et donc d'éviter la vitrification de la résine, pendant que l'excédent d'humidité s'échappe, sous forme de vapeur, par les trous du moufle.

Dans ce qui suit, l'invention est exposée plus en détail à l'aide de dessins représentant seulement un mode d'exécution.

0075543

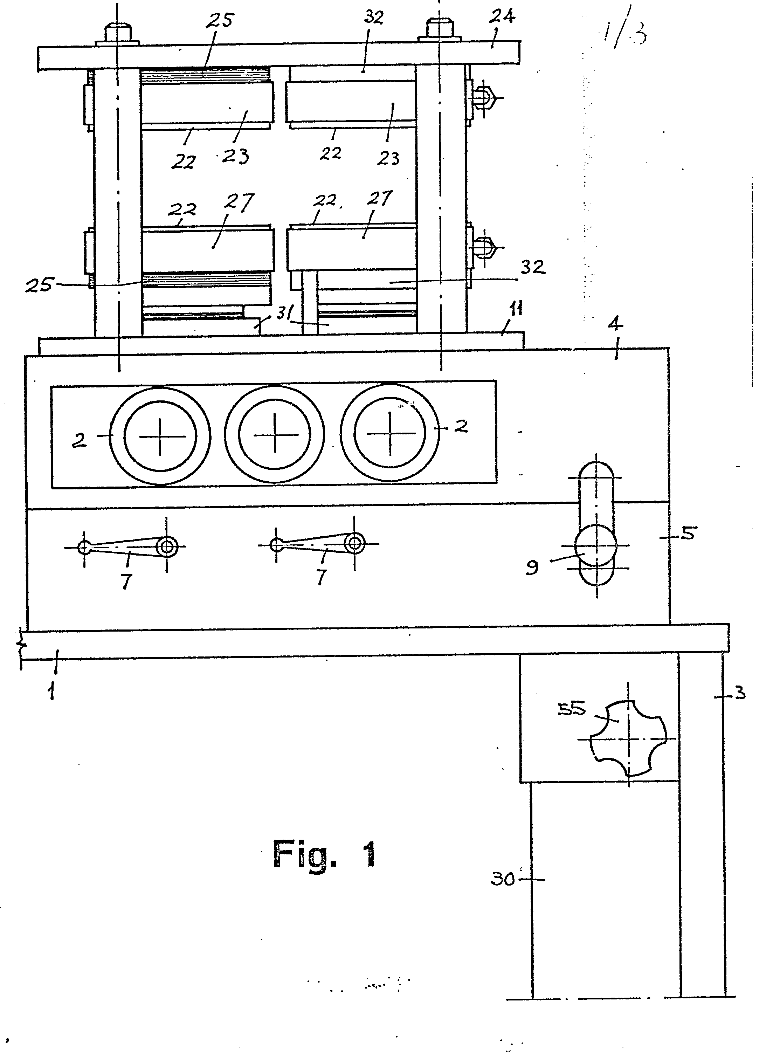

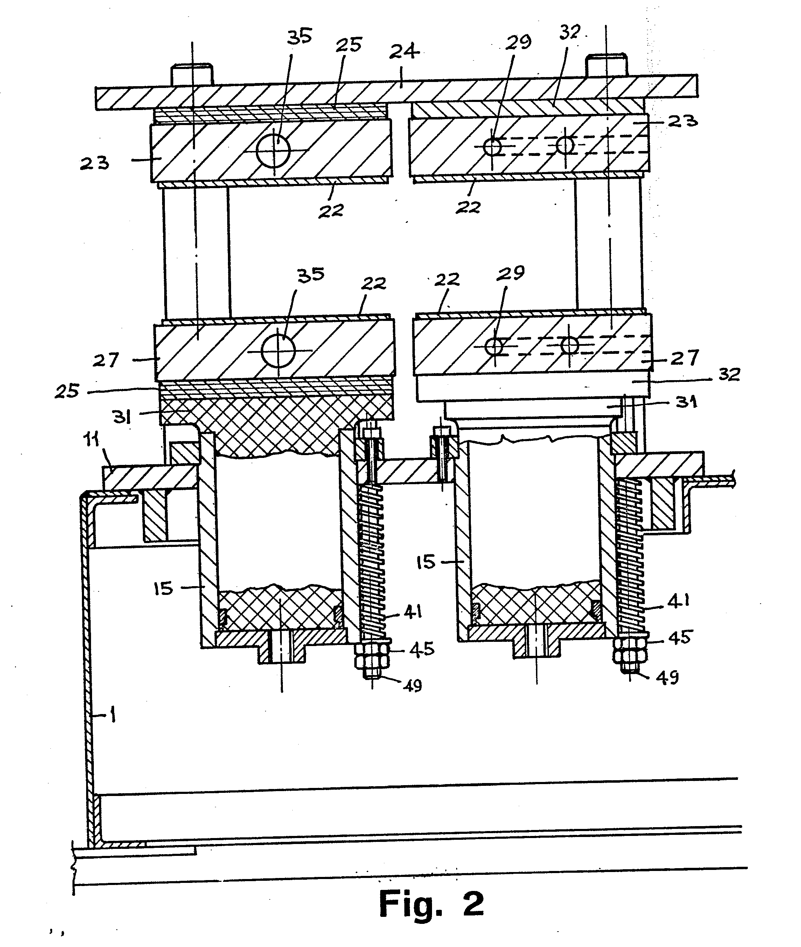

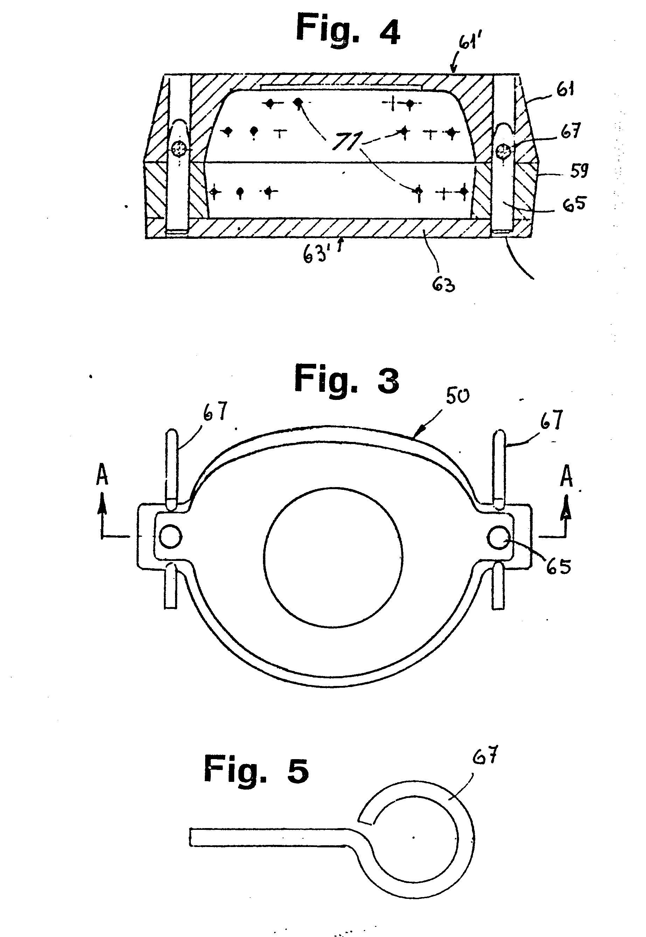

La figure 1 est une vue frontale en élévation du dispositif selon l'invention; la figure 2 est une vue en coupe verticale du dispositif de la figure 1; la figure 3 est une vue en plan d'un moufle pour le dispositif selon l'invention; la figure 4 est une coupe suivant la ligne A-A de la figure 3; la figure 5 est un détail d'une cheville de blocage du moufle de la figure 3.

Le procédé de polymérisation rapide de prothèses odontologiques en résines acryliques, selon l'invention, comporte dans l'ordre de:

- fermer le moufle déjà chargé en le bloquant avec les chevilles appropriées;

- chauffer à 135°C les mâchoires d'un premier étau et de maintenir à 15÷20°C les mâchoires d'un deuxième étau;

- serrer le moufle ainsi bloqué, entre les mâchoires du premier étau, avec une pression de généralement 60÷110 kg/cm$^2$ et ce, pendant quelques minutes (en général 15);

- retirer, débloquer et ouvrir le moufle.

Le dispositif de réalisation de ce procédé comprend:

- un bâti (1) avec, une première plaque horizontale (11) et une deuxième plaque horizontale (24) située au-dessus, un chevalet de support (3), un premier tableau (4) des instruments de contrôle (2) respectivement, de la température des étaux, de la pression de serrage des étaux et du temps de cuisson, et un deuxième tableau (5) sous-jacent pour les robinets d'inversion (7) et de décharge (55) d'une installation oléo- dynamique d'actionnement des étaux.

- un dispositif de serrage à deux étaux parallèles, contigüs, mais indépendants: chaque étau est constitué par une mâchoire fixe en forme de plaque (23) horizontale, fixée à la plaque (24) du bâti (1) et par une mâchoire mobile, en forme de plaque (27) horizontale, fixée à la tête du piston (31) d'un cylindre hydraulique (15) à axe vertical correspondant, , fixé sur la plaque (11) du bâti (1) et faisant partie avec la pompe (30) de l'installation oléodynamique susmentionnée. Les plaques (23-27) du premier étau (représenté à gauche des dessins annexés) destiné à la cuisson de polymérisation, sont munies de perforations (35) destinées à loger les résistances électriques de chauffage et en plus, ont les surfaces externes protégées contre les pertes de chaleur par une couche de matière calorifuge (25) et incombustible, en général de l'amiante. Les plaques (23-27) du deuxième étau (représenté à droite des dessins annexés) destiné au refroidissement du moufle après la cuisson, sont munies de canaux internes (29) de circulation du liquide de refroidissement, en général de l'eau non réutilisée, et sont en plus accouplées externement à une plaque ou bague de de métal (32). Les surfaces opposées des plaques (23-27) de chaque étau sont munies d'une lame métallique (22) et les surfaces actives correspondantes sont parfaitement horizontales pour obtenir le meilleur contact possible avec les bases du moufle qui y sera interposé et donc,

- 5 -  0075543

pour assurer la transmission maximum de la chaleur entre l'étau et le moufle et vice-versa.

Pour l'ouverture de chaque étau on a prévu plusieurs ressorts antagonistes (41) à compression, placés sur les tiges (49) correspondantes fixées sur le collet des pistons (31) et serrées entre la plaque (11) et les écrous (45).

- au moins un moufle (50) constitué par un corps central (59), un couvercle (61) et un fond (63) superposables; le corps central (59) et le couvercle (61) sont assemblés à l'aide de goupilles (65) devant être bloquées par des chevilles (67); le fond (63) est fixé au corps central (59) par des bagues élastiques ou moyens similaires.

Les bases inférieure (63') et supérieure (61') du moufle (50) sont horizontales et bien usinées pour adhérer parfaitement aux plaques (23-27) des étaux. Les parois latérales du corps central (59) et du couvercle (61) du moufle (50) sont munies de plusieurs trous (71) passants servant à l'évacuation de la vapeur d'eau et au drainage d'éventuelles condensations.

Le fonctionnement est le suivant.

Une prothèse préparée en résine acrylique et supportée par l'empreinte de plâtre respective est introduite dans le moufle (50) qui est ensuite fermé à l'aide des chevilles (67). Ce moufle est ensuite posé sur la plaque mobile (27) de l'étau de chauffage. A ce stade, on actionne le robinet (7) et à l'aide du levier (9), on pompe l'huile dans le cylindre (15) de cet étau provoquant ainsi la levée du piston (31) et de la

- 6 -

CC75543

plaque (27) jusqu'à ce que la base supérieure (61') du moufle (50) soit en contact avec
la plaque fixe (23) de cet étau. Etant chauffées à 135°C, les plaques (23-27) transmettent
leur chaleur au moufle dont la partie interne
atteint rapidement une température supérieure
à 100°C, mais non supérieure à 110÷115°C, de
façon à obtenir la polymérisation, complète et
très rapide (15 minutes), de la résine de la
prothèse. La température des plaques de chauffage et la durée de polymérisation sont contrôlées par un thermostat (2) et un temporisateur
(2) situés sur le tableau (4). En cours de polymérisation, l'excédent éventuel de vapeur d'eau,
due à la déshydratation du plâtre de l'empreinte, s'échappe par les trous (71) vaporisateurs
du moufle (59). A la fin de la polymérisation,
on ouvre l'étau de cuisson en manoeuvrant les
robinets (7)et (55) pendant que les ressorts (41)
provoquent la descente du piston (31) et de la
plaque (27). On place alors le moufle sur la
plaque (27) de l'étau de refroidissement; puis,
à l'aide de manoeuvres analogues à celles décrites pour le premier étau, on serre cet étau et
on laisse refroidir le moufle pendant quelques
minutes (en général 15) au cours desquelles
l'eau de refroidissement circule dans les canaux
(29) des plaques (23) et (27). En dernier lieu,
on ouvre l'étau de refroidissement et on en retire le moufle.

En pratique, l'opération de refroidissement d'un
moufle s'effectue en même temps que celle de

- 7 -

0075543

chauffage d'un autre moufle et donc, on peut
ainsi réaliser un cycle opérationnel continu et
avoir un moufle en sortie toutes les 15 minutes.

# R E V E N D I C A T I O N S

1) Procédé pour la polymérisation rapide, en moufle, de prothèses odontologiques en résines acryliques, caractérisé en ce qu'il comprend, dans l'ordre, les phases suivantes:

- fermer et bloquer le moufle déjà chargé;

- chauffer à sec à plus de 100°C le moufle ainsi bloqué avec la pression appropriée et ce, pendant quelques minutes;

- refroidir à sec à température ambiante le moufle bloqué avec la bonne pression et ce, pendant une durée égale à celle du chauffage;

- retirer, débloquer et ouvrir le moufle.

2) Procédé selon la revendication 1), caractérisé en ce que le chauffage à sec du moufle est obtenu par contact avec les mâchoires d'un premier étau parallèle, chauffées électriquement à plus de 135°C et serrant le moufle avec une pression d'en général $60 \div 110$ $kg/cm^2$, pendant 15 minutes.

3) Procédé selon la revendication 1), caractérisé en ce que le refroidissement à sec du moufle est obtenu par contact avec les mâchoires d'un deuxième étau parallèle, refroidies par circulation d'eau à $15 \div 20$°C et serrant le moufle avec une pression d'en général $60 \div 110$ $kg/cm^2$, pendant 15 minutes.

4) Dispositif pour la polymérisation rapide, en moufle, de prothèses odontologiques en résines acryliques, caractérisé en ce qu'il comprend:

- un bâti (1) avec une première plaque horizontale (11) et une deuxième plaque horizontale (24) située au-dessus de la première, avec un cheva-

let (3) de support, avec un premier tableau (4) des instruments (2) de contrôle et un deuxième tableau (5) des organes de commande d'une installation fluidodynamique;

- deux étaus parallèles, contigüs mais indépendants, ayant chacun des mâchoires en forme de plaque horizontale, l'une (23) fixe et l'autre (27) mobile verticalement;

- au moins un moufle (50) dont les bases sont plates et horizontales.

5) Dispositif selon la revendication 4), caractérisé en ce que l'installation fluidodynamique comprend deux cylindres (15) en parallèle, à axe vertical, fixés sur la plaque (11) et dont le piston (31) relatif est fixé sur la plaque inférieure (27) de l'étau correspondant, une pompe (30), des robinets de déviation (7) et de décharge (55) du fluide, et un levier (9) de pompage du fluide.

6) Dispositif selon la revendication 1), caractérisé en ce que les plaques (23-27) du premier étau sont munies de moyens de chauffage à résistance électrique et en ce que les plaques (23-27) du deuxième étau sont munies de moyens de refroidissement à circulation d'eau.

7) Dispositif selon la revendication 4), caractérisé en ce que le moufle (50) est constitué par trois éléments (59-61-63) superposés et assemblés par l'intermédiaire de goupilles (65) bloquées par des chevilles (67).

8) Dispositif selon la revendication 4), caractérisé en ce que le moufle (50) est muni de trous

(71) passants, vaporisateurs.

**Fig. 1**

**Fig. 2**

0075543

# Fig. 4

# Fig. 3

# Fig. 5